# DEMANDE DE BREVET EUROPEEN

(11) **EP 1 693 232 A1**
(43) Date de publication de la demande: **23.08.2006**
(21) Numéro de dépôt: 05290398.6
(22) Date de dépôt: 22.02.2005
(51) Int. Cl.: B60F 3/00, B62D 11/04

(54) **Véhicule tout terrain amphibie**

(71) Demandeur: Heuliez, 79140 Cerisay (FR)
(72) Inventeur: Queveau, Gérard, 79140 Le Pin (FR); Largeau, Patrick, 49300 Cholet (FR)
(74) Mandataire: Geismar, Thierry

(57) **Abrégé**

L'invention concerne un véhicule tout terrain, notamment amphibie, possédant un train de roues gauche (6, 7, 8) et un train de roues droit agencés pour propulser le véhicule tant sur terre que sur l'eau, des moyens moteurs (10) pour entraîner lesdits trains de roues, et des moyens de contrôle (15) mobiles aptes à fournir au moins un signal de contrôle en fonction de leur position.

Lesdits moyens moteurs comprennent un premier moteur électrique apte à entraîner le train de roues gauche et un deuxième moteur électrique apte à entraîner le train de roues droit, et des moyens de synchronisation (16) sont prévus pour synchroniser les deux moteurs électriques en fonction du signal de contrôle.

## Description

La présente invention concerne un véhicule tout terrain amphibie, et plus particulièrement un tel véhicule possédant un train de roues gauche et un train de roues droit agencés pour propulser le véhicule tant sur terre que sur l'eau, des moyens moteurs pour entraîner lesdits trains de roues, et des moyens de contrôle mobiles aptes à fournir un signal de contrôle en fonction de leur position.

On connaît déjà des véhicules tout terrain, notamment à quatre ou six roues, équipés d'un moteur thermique entraînant les roues par une chaîne de transmission. Sur terre, la manoeuvrabitité du véhicule pour lui donner une direction voulue est obtenue en bloquant un des trains de roues et en entraînant l'autre afin de faire tourner le véhicule dans la direction voulue.

Les véhicules tout terrain à moteurs thermiques présentent un certain nombre d'inconvénients.

En premier lieu, leur manoeuvrabilité n'est pas optimale.

Par ailleurs, s'agissant de véhicules tout terrain, ils sont conçus pour être utilisés essentiellement en milieu rural. Or, ces véhicules sont bruyants et ils entraînent en outre une pollution atmosphérique par émission des gaz d'échappement.

On connaît également des véhicules tout terrain, notamment à quatre ou six roues, équipés d'un moteur électrique.

Le document US 5 842 532 décrit un véhicule électrique à six roues pour le transport d'une personne. Ce véhicule est équipé d'un train de roues gauche et d'un train de roues droit entraînés par des moyens moteurs. Cependant, la commande des moteurs n'est pas optimisée afin de disposer d'une précision de conduite satisfaisante. De plus, le véhicule décrit ne possède pas de caractéristiques permettant un déplacement optimal sur l'eau, sur des sols glissants, des terrains détrempés, boueux ou enneigés.

Or, dans ces utilisations particulières, la commande des moteurs est particulièrement critique du fait de la moindre résistance du terrain aux déplacements du véhicule.

La présente invention vise à fournir un véhicule du type amphibie, dans lequel le niveau sonore est diminué, les gaz d'échappement supprimés, et la manoeuvrabilité améliorée.

A cet effet, l'invention a pour objet un véhicule tout terrain amphibie possédant un train de roues gauche et un train de roues droit agencés pour propulser le véhicule tant sur terre que sur l'eau, des moyens moteurs pour entraîner lesdits trains de roues, et des moyens de contrôle mobiles aptes à fournir au moins un signal de contrôle en fonction de leur position, lesdits moyens moteurs comprennent un premier moteur électrique apte à entraîner le train de roues gauche et un deuxième moteur électrique apte à entraîner le train de roues droit, et des moyens de synchronisation sont prévus pour synchroniser les deux moteurs électriques en fonction du signal de contrôle.

Ainsi, l'utilisation de moteurs électriques permet de diminuer les pollutions sonores et atmosphériques.

Par ailleurs, l'utilisation de deux moteurs distincts pour les trains de roues gauche et droit associée à des moyens de synchronisation des deux moteurs améliore grandement la manoeuvrabilité du véhicule quel que soit le type surface et notamment la précision de conduite du véhicule.

En particulier, les moyens de synchronisation permettent un déplacement optimal du véhicule quelles que soient les motricités différentes des roues ou l'alimentation différente des moteurs.

La conduite du véhicule à l'aide d'un organe de commande unique permet également d'obtenir une bonne manoeuvrabilité.

Dans un mode de réalisation particulier, lesdits moyens moteurs comprennent deux réducteurs à rapport de réduction constant, chaque réducteur étant monté en sortie d'un des moteurs électriques pour entraîner le train de roues correspondant.

Dans un autre mode de réalisation, lesdits moyens moteurs sont composés de moteurs-roues, ce type de moteur possédant un fort couple à faible vitesse. Ainsi il est possible de se passer de réducteurs, et de réduire ainsi le poids du véhicule tout en améliorant le rendement.

Egalement dans un mode de réalisation particulier, chaque moteur électrique est agencé pour entraîner une première roue du train de roues correspondant, des moyens de transmission étant prévus entre ladite première roue et la ou les autre(s) roue(s) de ce train de roues.

Plus particulièrement, le véhicule selon l'invention peut comprendre une chaîne de transmission pour entraîner ladite première roue de chaque train de roues à partir du moteur électrique correspondant.

Plus particulièrement également, le véhicule selon l'invention peut comprendre une chaîne de transmission pour entraîner une roue de chaque train de roues à partir d'une roue adjacente du même train de roues.

Dans un mode de réalisation particulier, lesdits moyens de contrôle mobiles comprennent un levier de commande de type manche à balai.

Plus particulièrement, ledit levier de commande peut comporter une position centrale (A) neutre dans laquelle aucun moteur électrique n'est alimenté, une position avant (B) où les deux moteurs électriques sont utilisés à puissance maximum, une position arrière (C) de recul ou de récupération maximum pour ralentir le véhicule, et un ensemble de positions intermédiaires (D-I) où les deux moteurs sont alimentés différemment de manière à ce qu'ils tournent à des vitesses et/ou dans des sens différents.

Encore plus particulièrement, ledit levier de commande peut comporter au moins une première plage de positions intermédiaires (F, G) dans laquelle l'un des moteurs est à l'arrêt et l'autre est alimenté pour tourner dans un premier sens de manière à faire tourner le véhicule dans un sens ou dans l'autre avec une certaine direction d'avance et au moins une deuxième plage de positions intermédiaires (H, 1) dans laquelle l'un des moteurs est à l'arrêt et l'autre est alimenté pour tourner dans l'autre sens de manière à faire tourner le véhicule dans un sens ou dans l'autre avec une l'autre direction d'avance.

Ledit levier de commande peut en outre comporter deux positions latérales dans lesquelles l'un des moteurs est alimenté pour tourner dans un sens et l'autre moteur est alimenté pour tourner dans l'autre sens de manière que le véhicule tourne sur lui-même.

Dans un mode de réalisation particulier, lesdits moteurs électriques sont des moteurs triphasés.

On décrira maintenant, à titre d'exemple non limitatif, un mode de réalisation particulier de l'invention, en référence aux dessins schématiques annexés dans lesquels :
- la figure 1 est une vue de côté, partiellement en arraché, d'un véhicule tout terrain amphibie selon un mode de réalisation de l'invention ;
- la figure 2 illustre les différentes positions d'un levier de commande de type manche à balai utilisé sur un véhicule selon l'invention.
- La figure 3 est une vue de côté d'un véhicule tout terrain amphibie selon un autre mode de réalisation de l'invention
- La figure 4 est une vue arrière des moyens moteurs selon le mode de réalisation représenté sur la figure 3.

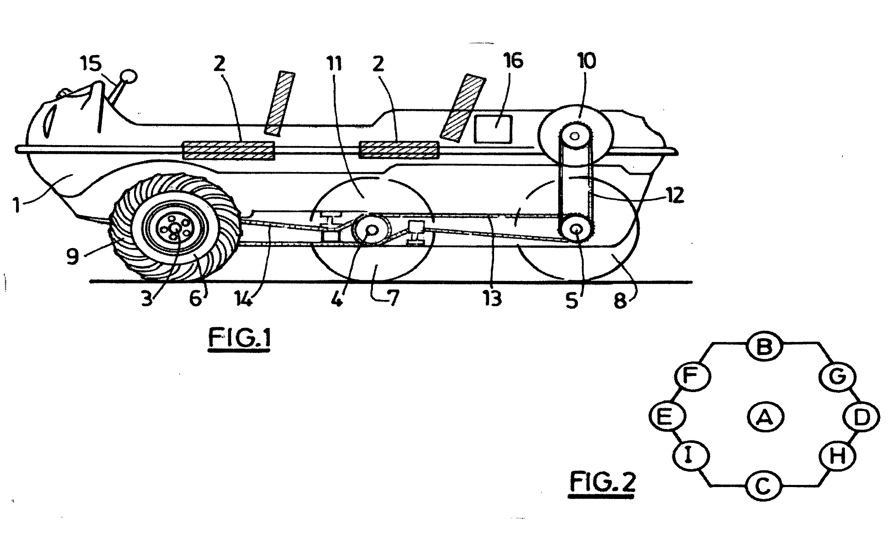

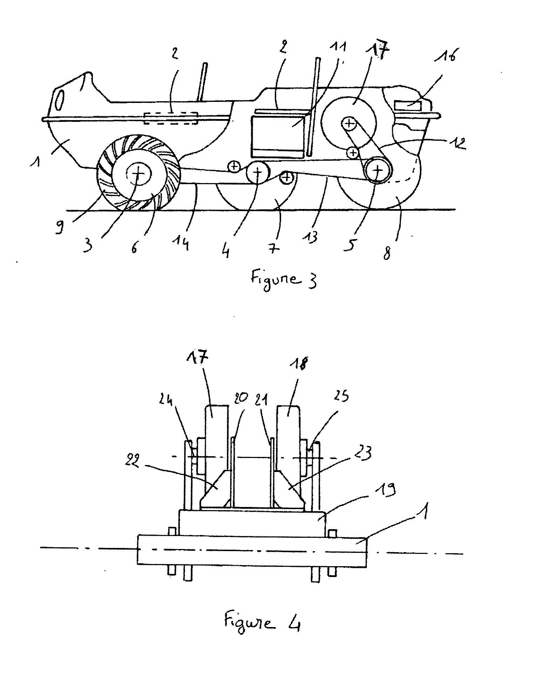

Le véhicule tout terrain amphibie des figures 1 et 3 comporte une caisse 1 étanche dans laquelle sont montées deux rangées de sièges 2. La caisse 1 supporte également six axes indépendants, 3, 4, 5 formant le train de roues gauche du véhicule et les axes symétriques par rapport au plan de symétrie du véhicule qui forment le train de roues droit du véhicule.

Sur les axes 3, 4 et 5 et sur les axes symétriques, sont montées respectivement une roue avant 6, une roue intermédiaire 7 et une roue arrière 8.

Dans le cas présent, les six roues du véhicule sont motrices. A terre, elles supportent et entraînent le véhicule à la manière traditionnelle d'un véhicule tout terrain. Sur l'eau, l'entraînement est obtenu par la forme en aube des sculptures 9 des pneumatiques montés sur les roues.

Selon le mode de réalisation détaillé de la figure 1, la caisse 1 supporte dans sa partie arrière deux ensembles motoréducteurs 10 composés chacun d'un moteur électrique triphasé et d'un réducteur à rapport de réduction constant. Les moteurs électriques sont alimentés à partir d'une batterie d'accumulateurs 11, par exemple au plomb gélifié ou au lithium, située à proximité du centre de la caisse 1.

La batterie 11 a ici une tension inférieure à 60 volts pour assurer la sécurité en mode amphibie.

Le motoréducteur 10 correspondant au train de roues gauche entraîne la roue arrière gauche à l'aide d'une chaîne de transmission 12 disposée entre deux pignons montés l'un sur l'arbre de sortie du motoréducteur 10 et l'autre sur l'axe 5. De la même manière, une chaîne 13 est disposée entre deux pignons montés sur les axes 4 et 5 pour entraîner la roue 7 et une chaîne 14 est disposée entre les axes 3 et 4 pour entraîner la roue avant 3.

Bien entendu, tout autre mode de transmission pourrait être utilisé à la place des chaînes 12, 13 et 14. Les chaînes de transmission 12, 13, 14 peuvent par exemple être remplacé en totalité ou en partie par des courroies.

On observe que tant le réducteur du motoréducteur 10 que les transmissions 12, 13 et 14 peuvent avoir un rapport de réduction constant, le couple des moteurs pouvant être dimensionné de manière à se passer d'une transmission à rapports discrets.

Afin d'améliorer la précision de direction et de simplifier les mécanismes composant les moyens moteurs, un autre mode de réalisation de l'invention est proposé.

Selon cet autre mode de réalisation représenté sur les figures 3 et 4, les moteurs électriques utilisés sont des moteurs-roues 17, 18 étanches. Les moteurs-roues sont des moteurs électriques à aimants permanents dont l'épaisseur est relativement faible par rapport au diamètre.

Les moteurs-roues 17, 18 utilisés peuvent être des moteurs de la série « e-wheel » fabriqué par la société PML Flightlink Ltd. Plus particulièèrement, les moteurs utilisés sont des moteurs EW3030.

Les caractéristiques techniques du moteur EW3030 sont les suivantes:
- Tension max: 72V
- Couple nominal (moyen pemanent): 80Nm
- Couple de pointe : 320Nm
- Coefficient de couple Kt: 1,37Nm/A
- Coefficient Fcem Ke: 0,144V/t/mn
- Résistance Induit : 0,061ohm à 20°C
- Résistance thermique : 5,053W/degré

Ce type de moteurs possède de nombreux avantages.

En effet, ce type de moteur possède un fort couple à faible vitesse. Ainsi, contrairement au mode de réalisation représenté sur la figure 1, les moyens moteurs ne comportent pas de réducteurs.

La vitesse de rotation des moteurs-roues 17, 18 est réglable avec une très grande précision. Par conséquent, les deux moteurs-roues 17, 18 actionnant chaque train de roue peuvent être synchronisé avec une très grande précision.

De plus, les moteurs-roues 17, 18 possèdent un excellent rendement et un rapport puissance délivrée sur poids élevé.

Enfin, les moteurs-roues 17, 18 permettent également la récupération d'énergie lors du freinage.

Selon un mode de réalisation préférentiel, les moteurs-roues 17, 18 sont des moteurs sans balai, ce qui réduit l'entretien et améliore la fiabilité en milieu humide.

De préférence, de manière à accentuer les avantages mentionnés ci-dessus, les moteurs sont alimentés par une alimentation triphasée à courant continu.

La commande électrique des moteurs est réalisée par un boîtier électronique de contrôle 16.

Dans un mode de réalisation de l'invention, ce boîtier électronique 16 est agencé afin de permettre l'utilisation de tous types de batteries dont la tension est comprise entre 12 V et 72 V. Ce boîtier 16 possède également un commutateur à avance de phase qui permet de maximiser le rendement des moteurs 17,18.

Les figures 3 et 4 illustrent la disposition des moyens moteurs selon le deuxième mode de réalisation de l'invention.

Une platine 19 est fixée au châssis 1 du véhicule et porte deux plaques verticales 20, 21 de fixation des moteurs-roues 17, 18. Pour renforcer ces deux plaques verticales 20, 21, des plaques de renforts 22, 23 sont disposées entre la platine support 19 et les plaques de fixation 20 ,21.

Les moteurs-roues 17, 18 sont fixés sur les plaques verticales 20, 21 et les arbres de sortie 24, 25 des moteurs 17, 18 sont orientés vers les trains de roues à actionner.

L'entraînement des roues 6, 7, 8 est réalisé à l'aide de chaînes de transmission 12, 13, 14 tel qu'il est décrit précédemment et/ou de courroies.

Notons que les accumulateurs 11 sont disposés au voisinage du centre du véhicule et vers le bas ce qui permet d'améliorer la stabilité sur terre et en particulier sur eau. En effet, les batteries représentent un poids important qui peut avantageusement être utilisé comme un leste permettant, lorsqu'il est bien positionné, de stabiliser le véhicule. Les moteurs 17, 18 peuvent jouer, alternativement ou en compléments aux batteries, le même rôle de lestes d'équilibrage.

Un levier de commande 15 du type manche à balai fournit de façon connue deux signaux de commande en fonction de sa position angulaire. Ces signaux de commande sont adressés à un boîtier électronique 16. Dans le mode de réalisation détaillé sur la figure 1, le boîtier électronique 16 assure la synchronisation des motoréducteurs 10 en fonction de ces signaux de commande.

Selon le mode de réalisation illustré par les figures 3 et 4, le boîtier électronique 16 assure la synchronisation des moteurs roues 17, 18.

La synchronisation des moteurs peut consister à synchroniser la vitesse de rotation des moteurs, par exemple par un système de compteur de tours solidaires des roues ou des moteurs, ou à synchroniser l'alimentation des moteurs.

La précision de la synchronisation des moteurs permet de maintenir précisément un cap ou de maintenir précisément une courbure. Une synchronisation précise des moteurs permet également de réaliser aisément des auto-girations, c'est-à-dire des pivotements sur place.

On voit à la figure 2 différentes positions du levier 15.

En position A, aucun moteur n'est alimenté et le véhicule est en roue libre.

En position B, les deux moteurs sont utilisés à puissance maximale, le boîtier électronique 16 assurant qu'ils tournent à la même vitesse.

En position C, les deux moteurs sont en récupération maximale pour ralentir le véhicule lorsqu'il avance. C'est également la position de recul. Là encore, le boîtier 16 assure la même vitesse de rotation pour les deux moteurs.

En positions D et E, l'un des moteurs tourne dans un sens et l'autre tourne dans l'autre sens pour que le véhicule tourne sur lui-même.

Dans les positions F et G, un des moteurs tourne dans un sens et l'autre est arrêté pour permettre une rotation du véhicule dans une des directions d'avance.

Enfin, les positions H et I correspondent aux positions F et G avec le moteur qui tourne tournant dans l'autre sens ce qui permet une rotation du véhicule dans l'autre direction d'avance.

En fait, les positions F, G, H et 1 constituent des plages intermédiaires permettant de doser la vitesse et les couples à mettre en jeu pour disposer d'un maximum de confort d'utilisation.

Notons que la synchronisation du moteur électrique par le boîtier électronique 16 autorise l'absence de différentiel.

Enfin, l'ensemble fonctionne sans refroidissement liquide, donc pratiquement sans maintenance, d'un bout à l'autre de la chaîne cinématique.

## Revendications

1. Véhicule tout terrain amphibie possédant un train de roues gauche (6, 7, 8) et un train de roues droit agencés pour propulser le véhicule tant sur terre que sur l'eau, des moyens moteurs (10) pour entraîner lesdits trains de roues, et des moyens de contrôle (15) mobiles aptes à fournir au moins un signal de contrôle en fonction de leur position, lesdits moyens moteurs comprennent un premier moteur électrique apte à entraîner le train de roues gauche et un deuxième moteur électrique apte à entraîner le train de roues droit, et des moyens de synchronisation (16) sont prévus pour synchroniser les deux moteurs électriques en fonction du signal de contrôle.

2. Véhicule selon la revendication 1, dans lequel lesdits moyens moteurs comprennent deux réducteurs à rapport de réduction constant, chaque réducteur étant monté en sortie d'un des moteurs électriques pour entraîner le train de roues correspondant.

3. Véhicule selon la revendication 1, dans lequel les moteurs électriques sont des moteurs-roues (17,18).

4. Véhicule selon la revendication 3, comprenant un boîtier électronique 16 apte à commander les moteurs (17,18), ledit boîtier électronique 16 possédant un commutateur à avance de phase permettant de maximiser le rendement des moteurs-roues (17,18).

5. Véhicule selon l'une quelconque des revendications 1 à 4, dans lequel chaque moteur électrique est agencé pour entraîner une première roue (8) du train de roues correspondant, des moyens de transmission (13, 14) étant prévus entre ladite première roue et la ou les autre(s) roue(s) (6, 7) de ce train de roues.

6. Véhicule selon la revendication 5, comprenant une chaîne de transmission (12) et/ou une courroie pour entraîner ladite première roue de chaque train de roues à partir du moteur électrique correspondant.

7. Véhicule selon l'une quelconque des revendications 5 et 6, comprenant une chaîne de transmission (13 ; 14) et/ou une courroie pour entraîner une roue (7 ; 6) de chaque train de roues à partir d'une roue adjacente (8 ; 7) du même train de roues.

8. Véhicule selon l'une quelconque des revendications 1 à 7, dans lequel lesdits moyens de contrôle mobiles comprennent un levier de commande de type manche à balai.

9. Véhicule selon la revendication 8, dans lequel ledit levier de commande comporte une position centrale (A) neutre dans laquelle aucun moteur électrique n'est alimenté, une position avant (B) où les deux moteurs électriques sont utilisés à puissance maximum, une position arrière (C) de recul ou de récupération maximum pour ralentir le véhicule, et un ensemble de positions intermédiaires (D-1) où les deux moteurs sont alimentés différemment de manière qu'ils tournent à des vitesses et/ou dans des sens différents.

10. Véhicule selon la revendication 9, dans lequel ledit levier de commande comporte au moins une première plage de positions intermédiaires (F, G) dans laquelle l'un des moteurs est à l'arrêt et l'autre est alimenté pour tourner dans un premier sens de manière à faire tourner le véhicule dans un sens ou dans l'autre avec une certaine direction d'avance et au moins une deuxième plage de positions intermédiaires (H, 1) dans laquelle l'un des moteurs est à l'arrêt et l'autre est alimenté pour tourner dans l'autre sens de manière à faire tourner le véhicule dans un sens ou dans l'autre avec une autre direction d'avance.

11. Véhicule selon l'une quelconque des revendications 9 et 10, dans lequel ledit levier de commande comporte deux positions latérales dans lesquelles l'un des moteurs est alimenté pour tourner dans un sens et l'autre moteur est alimenté pour tourner dans l'autre sens de manière à ce que le véhicule tourne sur lui-même.

12. Véhicule selon l'une quelconque des revendications 1 à 11, dans lequel lesdits moteurs électriques sont des moteurs triphasés.

13. Véhicule selon la revendication 12, dans lequel lesdits moteurs électriques triphasés sont des moteurs à courant continu sans balai.

14. Véhicule selon l'une quelconque des revendications 1 à 13, dans lequel les moteurs électriques sont alimentés à partir d'une batterie d'accumulateurs 11, la batterie étant située à proximité du centre de la caisse 1.

15. Véhicule selon l'une quelconque des revendications 1 à 14, dans lequel les moteurs électriques sont alimentés à partir d'une batterie d'accumulateurs 11 au plomb gélifié ou au lithium.
